# EUROPEAN PATENT APPLICATION

(11) **EP 4 524 116 A1**
(43) Date of publication of application: **19.03.2025**
(21) Application number: 23803591.9
(22) Date of filing: 10.05.2023
(51) Int. Cl.: C03B 37/018, C03B 8/04

(54) **OPTICAL FIBER PREFORM AND METHOD FOR PRODUCING OPTICAL FIBER PREFORM**

(30) Priority: 10.05.2022 JP 2022077709
(71) Applicant: SHIN-ETSU CHEMICAL CO., LTD., Tokyo 1000005 (JP)
(72) Inventor: URATA, Yuhei, Kamisu-shi, Ibaraki 314-0102 (JP)
(74) Representative: Pfenning, Meinig & Partner mbB
(86) International application number: PCT/JP2023/017635
(87) International publication number: WO 2023/219116

(57) **Abstract**

An optical fiber preform, when manufactured by manufacturing a core glass preform composed of a core portion and a part of a clad portion, and then providing a remaining part of the clad portion on outside of the core glass preform, is characterized in that, in the core glass preform, a radial position where a relative refractive index difference has a value which is 0.45 times the relative refractive index difference at a core center is defined as a core radial position, then there is, in a range of 5% inside the core radial position, a location where the relative refractive index difference exhibits a locally high local maximum value ΔM and a location where the relative refractive index difference exhibits a locally low local minimum value Δm, and a value of ΔM-Δm does not exceed 0.04%.

## Description

### BACKGROUND

### 1. TECHNICAL FIELD

The present invention relates to a refractive index distribution of an optical fiber preform to be drawn into an optical fiber.

### 2. RELATED ART

Recently, demand for an optical fiber has been growing with an increase in data communication volume, and there is a need for upsizing an optical fiber preform to meet the growing demand.

A typical optical fiber preform for communication consists of a core portion with a high refractive index and a clad portion around its outer circumference with a relatively lower refractive index. One manufacturing method for an optical fiber preform is a 2-step manufacturing method in which a core glass rod composed of a core portion and a part of a clad portion is manufactured and then a remaining part of the clad portion is provided on its outside to obtain a final optical fiber preform. As a manufacturing method for a core glass rod, a VAD method is known. In the VAD method, a core deposition burner for depositing a core portion and a clad deposition burner for simultaneously depositing a clad portion on its outside are arranged in a reaction chamber, and glass raw material gas such as silicon tetrachloride, combustible gas such as hydrogen, and combustion-supporting gas such as oxygen are supplied to the respective burners to hydrolyze the glass raw material in an oxyhydrogen flame, thereby generating silica fine particles. The generated silica fine particles are deposited starting from a starting member along its central axis, which is raised relative to the burners while rotating around the central axis as an axis of rotation, to obtain a porous core soot body which includes a core layer and a clad layer. At this time, germanium dioxide is added to the core portion to increase the refractive index.

By vitrifying the produced core soot body into transparent glass, a core glass rod is obtained. Specifically, removal of an impurity and the vitrification into transparent glass can be performed by accommodating the core soot body in a processing chamber and heat-processing it by a heater arranged on an outer circumference of the processing chamber. Here, the impurity can be removed by supplying gas containing chlorine atoms to ambient gas while heating the core soot body at a temperature lower than a temperature at which the core soot body is vitrified into transparent glass. The impurity to be removed includes a metal element and a hydroxyl group or OH group which cause an increase in transmission loss of a drawn fiber. Subsequently, a set temperature of the heater is raised to perform heat processing to make the core soot body into a transparent core glass rod.

Upsizing the core soot body may reduce a cost of producing the core glass rod. In order to do this, in the VAD method, the core soot body with an increased diameter can be produced by increasing a flow rate of the raw material and the combustible gas supplied to the core deposition burner and the clad deposition burner. However, when the core soot body with the increased diameter is heated with the heater from the outer circumference as previously described, a distance between a surface of the core soot body and a center portion of the core soot body becomes larger, so the set temperature of the heater needs to be raised in order to sufficiently heat it to the center portion and remove the impurity.

Also, when the set temperature of the heater is raised, the germanium dioxide added to an area near the outer circumference of the core portion becomes more likely to vaporize during the heat processing, resulting in a change in a shape of a refractive index distribution of the core glass rod.

As a method for measuring a refractive index distribution of a core glass rod, for example, Non-Patent Document 1 describes a method for nondestructively measuring the refractive index distribution of the rod, referred to as a refraction angle method.

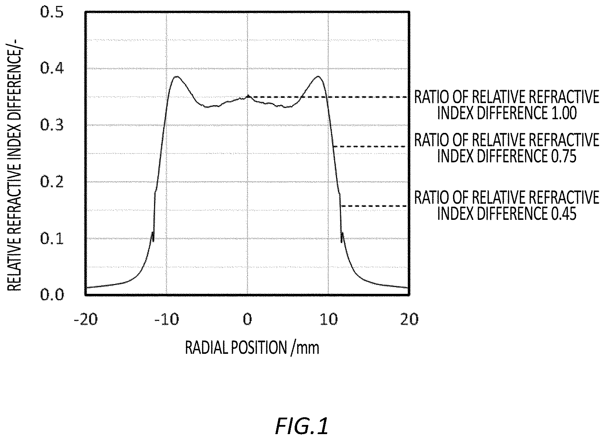

Fig. 1 illustrates an example of a refractive index distribution of a core glass rod. A vertical axis represents a relative refractive index difference Δ(r) at a radius r, and the relative refractive index difference Δ(r) is obtained as Δ(r) = (n-n₂)/n₁, where n is the refractive index at the radius r, n₁ is the refractive index at a core center, i.e., at the radius r = 0, and n₂ is the refractive index at a clad. In Fig. 1, a core radius, i.e., a radial position r_{0.45}, where the relative refractive index difference is 0.45 times that at the center, is 11.6 mm. Also, a ratio between the radial position r_{0.75}, where the relative refractive index difference is 0.75 times that at the center, and the radial position r_{0.45}, i.e., r_{0.75}/r_{0.45}, is 0.921.

One optical characteristic of an optical fiber for single-mode transmission is a cut-off wavelength. The cut-off wavelength is a shortest wavelength at which only one mode can propagate and is important in a single-mode transmission fiber since it is a boundary between single-mode transmission and multi-mode transmission for signal light. In the ITU-T recommendation G.652D standard, an upper limit of the cut-off wavelength for an optical fiber cable is specified. The cut-off wavelength is affected mainly by a refractive index distribution of a core portion of an optical fiber.

Patent document 1 describes a method for predicting and calculating a cut-off wavelength of a resulting optical fiber drawn from an optical fiber preform, based on a refractive index distribution of the preform. An optical characteristic of a final optical fiber can be estimated in a stage of a core glass rod, by measuring a refractive index distribution of a core glass rod first and then performing a calculation assuming a remaining clad portion is provided.

### Prior Art Documents

### Patent document

Patent Document 1: Japanese Patent Application Publication No. 2001-281094

### Non-Patent Document

Non-Patent Document 1: Dietrich Marcuse," Principles of Optical Fiber Measurements", Academic Press (1981)

### General Disclosure

However, it was observed that there was a wide discrepancy between the cut-off wavelength estimated from the refractive index distribution of a core glass rod obtained by vitrifying the core soot body with an increased diameter into transparent glass and the cut-off wavelength obtained by actually drawing the optical fiber preform provided with the remaining clad portion and actually making a measurement for the resulting optical fiber. In particular, this was obvious when the radius of the core portion was 10 mm or more.

In view of such a problem, the present invention aims to provide an optical fiber preform and a manufacturing method therefor, which achieve a small discrepancy between an estimated value obtained by hypothetically adding a clad and estimating and calculating the cut-off wavelength in the stage of a core glass rod and an actually measured value of the cut-off wavelength obtained by actually adding the clad and performing drawing, even if the diameter of the core soot body is increased.

As a result of intensive research, it is found that there is a location around a core radial position of a core glass rod where the refractive index exhibits a locally high local maximum value, and there is a location around it where the refractive index exhibits a local minimum value, and when a difference between the local maximum value and the local minimum value is large, there is a wide discrepancy between the estimated value of the cut-off wavelength obtained by hypothetically providing a remaining clad portion for this core glass rod and the actually measured value measured by actually providing a clad portion and performing drawing. Accordingly, it is discovered that given that, in a range of 5% inside the core radial position, a largest local maximum value among local maximum values of the relative refractive index difference is defined as a local maximum value ΔM and a smallest one is defined as a local minimum value Δm, if the value of ΔM-Δm does not exceed 0.04%, then the discrepancy between the estimated value and the actually measured value becomes small, and the present invention is achieved.

Accordingly, an optical fiber preform of the present invention, when manufactured by manufacturing a core glass preform composed of a core portion and a part of a clad portion, and then providing a remaining part of the clad portion on outside of the core glass preform, is characterized in that, in the core glass preform, a radial position where a relative refractive index difference has a value which is 0.45 times the relative refractive index difference at a core center is defined as a core radial position, then there is, in a range of 5% inside the core radial position, a location where the relative refractive index difference exhibits a locally high local maximum value ΔM and a location where the relative refractive index difference exhibits a locally low local minimum value Δm, and a value of ΔM-Δm does not exceed 0.04%. It is characterized that the value of ΔM-Δm preferably does not exceed 0.03%, more preferably does not exceed 0.02%, and more preferably does not exceed 0.01%.

A manufacturing method for an optical fiber preform of the present invention by manufacturing a core glass preform composed of a core portion and a part of a clad portion, and then providing a remaining part of the clad portion on outside of the core glass preform, is characterized in that, in the core glass preform, a radial position where a relative refractive index difference has a value which is 0.45 times the relative refractive index difference at a core center is defined as a core radial position, then there is, in a range of 5% inside the core radial position, a location where the relative refractive index difference exhibits a locally high local maximum value ΔM and a location where the relative refractive index difference exhibits a locally low local minimum value Δm, and the remaining part of the clad portion is provided on outside of the core glass preform having a value of ΔM-Δm which does not exceed 0.04%.

According to the present invention, if the value of ΔM-Δm calculated from the refractive index distribution of the core glass rod does not exceed 0.04%, the estimated value of the fiber cut-off wavelength obtained by hypothetically adding a clad and estimating and calculating the cut-off wavelength in the stage of a core glass rod and the actually measured value obtained by actually adding the clad and performing drawing are extremely close, thereby extremely small numerical value for a degree of discrepancy is obtained.

### BRIEF DESCRIPTION OF THE DRAWINGS

Fig. 1 illustrates a relative refractive index difference Δ(r) at a radius r.
Fig. 2 is a schematic view schematically illustrating manufacture of a glass fine particle deposit.
Fig. 3 is a schematic view illustrating a cross-sectional shape of a clad portion deposition burner.
Fig. 4 is a graph obtained by measuring a refractive index distribution of a core glass rod of an example 1 by the refraction angle method.
Fig. 5 is a graph obtained by measuring a refractive index distribution of a core glass rod of an example 6 by the refraction angle method.
Fig. 6 is a graph obtained by measuring a refractive index distribution of a core glass rod of a comparative example 1 by the refraction angle method.

### DESCRIPTION OF EXEMPLARY EMBODIMENTS

Although embodiments of the present invention are described below in reference to the examples of the present invention and the comparative examples based on the drawing, the present invention is not limited thereto, and various aspects are possible within the scope of the claims.

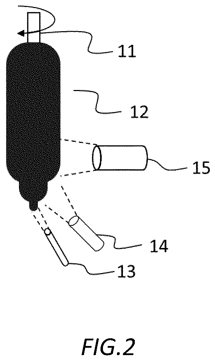

Fig. 2 schematically illustrates manufacture of a glass fine particle deposit. A core portion deposition burner 13 is illustrated in a lowermost part and is arranged independently from clad portion deposition burners 14 and 15 to supply a dopant raw material such as germanium tetrachloride together with silicon tetrachloride. In this way, a plurality of burners are often arranged to manufacture a soot body. A core portion is deposited on a starting material 11 by the core portion deposition burner 13, and after that, by the clad portion deposition burners 14 and 15 arranged above it, a clad portion is deposited so as to cover the core portion from outside.

### Examples

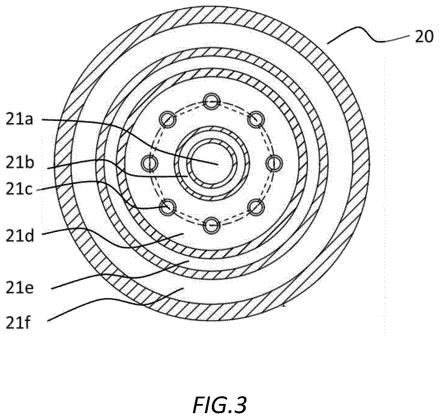

As an example 1 of the present embodiment, a total of three burners which include a core portion deposition burner 13, a first clad portion deposition burner 14, and a second clad portion deposition burner 15 were used to manufacture a glass fine particle deposit under conditions below. In Fig. 3, the cross-sectional shape of the first clad portion deposition burner 14 and the second clad portion deposition burner 15 is illustrated. A concentric quadruple-tube burner was used as the core portion deposition burner 13, and 0.32 L/min of silicon tetrachloride, 15 mL/min of germanium tetrachloride, and 0.19 L/min of argon as carrier gas were flowed through a central tube. 6.2 L/min of hydrogen was flowed through a second innermost tube, 0.75 L/min of argon as seal gas was flowed through a third innermost tube, and 10.2 L/min of oxygen was flowed through an outermost tube. In the first clad portion deposition burner, 0.80 L/min of silicon tetrachloride and 0.66 L/min of oxygen were flowed through a nozzle 21a, 30 L/min of hydrogen was flowed through a nozzle 21d, 18 L/min of oxygen was flowed through a nozzle 21f, and a total of 1.5 L/min of oxygen was flowed through a group of small-diameter nozzles 21c. On the other hand, in the second clad portion deposition burner, 4.8 L/min of silicon tetrachloride and 3.6 L/min of oxygen were flowed through a nozzle 21a, 65 L/min of hydrogen was flowed through a nozzle 21d, 31 L/min of oxygen was flowed through a nozzle 21f, and a total of 6.2 L/min of oxygen was flowed through a group of small-diameter nozzles 21c.

The glass fine particle deposit manufactured under such conditions was heated to about 1200°C in a furnace core tube containing chlorine gas and dehydrated, and then heated to about 1550°C in the furnace core tube containing helium gas and vitrified into transparent glass to obtain a core glass rod.

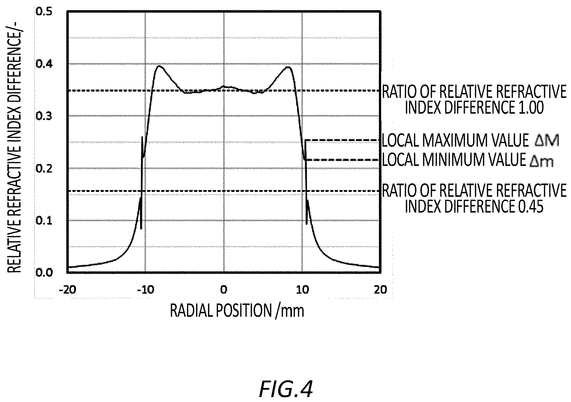

A refractive index distribution of the core glass rod of the example 1 was measured by the refraction angle method, and Fig. 4 was obtained which shows a relationship between a core radial position and a relative refractive index difference. A clad was hypothetically added to the core glass rod with such refractive index distribution and the optical characteristic was estimated and calculated. Also, when a clad was actually added to this core glass rod and the core glass rod was drawn to actually measure the cut-off wavelength of the optical fiber, a discrepancy between a previously obtained estimated value and an actually measured value of the cut-off wavelength was as little as 7 nm.

Respective numerical values of the present embodiment will be described in reference to Fig. 4. When a ratio of the relative refractive index difference at the core center is 1.00, a position where the ratio of the relative refractive index difference is 0.45 is defined as a core radial position r_{0.45}, and r_{0.45} is 11.52 mm. There is a radial position r_{ΔM} where the relative refractive index difference exhibits a local maximum value ΔM in a range of 5% inside the core radial position r_{0.45} (0.576 mm), where ΔM = 0.254% and r_{ΔM} = 11.47 mm. Also, there is a local minimum value of the relative refractive index difference Δm =0.216% inside it. A value of ΔM-Δm is 0.038%. Also, a radial position r_{0.75} where the relative refractive index difference is 0.75 times that at the center is located inside the radial position r_{ΔM} which exhibits the local maximum value ΔM, and a ratio between the radial positions r_{0.75} and r_{0.45}, i.e., r_{0.75}/r_{0.45}, is 0.942. In this way, locating r_{0.75} inside r_{0.45} by more than 5% of r_{0.45}, i.e., r_{0.75}/r_{0.45} < 0.95, allows to design wavelength dispersion at 1550 nm wavelength of the resulting optical fiber to be small.

In examples 2 to 5, core glass rods were each manufactured similarly to the example 1, and for the core glass rods, the value of ΔM-Δm (%) and a degree of discrepancy between estimated cut-off wavelengths and actually measured fiber cut-off wavelengths were obtained and collectively shown in Table 1.

As an example 6 of the present embodiment, a total of three burners which include a core portion deposition burner 13, a first clad portion deposition burner 14, and a second clad portion deposition burner 15 were used to manufacture a glass fine particle deposit under conditions below. A concentric quadruple-tube burner was used as the core portion deposition burner 13, and 0.30 L/min of silicon tetrachloride, 15 mL/min of germanium tetrachloride, and 0.19 L/min of argon as carrier gas were flowed through a central tube. 5.8 L/min of hydrogen was flowed through a second innermost tube, 1.3 L/min of argon as seal gas was flowed through a third innermost tube, and 9.5 L/min of oxygen was flowed through an outermost tube. A concentric quadruple-tube burner was used as the first clad portion deposition burner 14, and 0.96 L/min of silicon tetrachloride and 0.90 L/min of argon as carrier gas were flowed through a central tube. 16.7 L/min of hydrogen was flowed through a second innermost tube, 1.50 L/min of argon as seal gas was flowed through a third innermost tube, and 15.1 L/min of oxygen was flowed through an outermost tube. On the other hand, a concentric quintuple-tube burner was used as the second clad portion deposition burner 15, and 3.5 L/min of silicon tetrachloride and 2.8 L/min of oxygen were flowed through a central tube. 2.2 L/min of nitrogen was flowed through a second innermost tube, 60 L/min of hydrogen was flowed through a third innermost tube, 3.0 L/min of nitrogen was flowed through a fourth innermost tube, and 40 L/min of oxygen was flowed through an outermost tube.

The glass fine particle deposit manufactured under such conditions was heated to about 1100°C in a furnace core tube containing chlorine gas and dehydrated, and then heated to about 1500°C in the furnace core tube containing helium gas and vitrified into transparent glass to obtain a core glass rod.

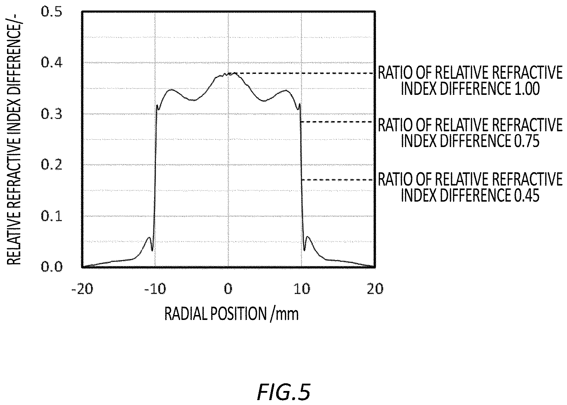

A refractive index distribution of the core glass rod of the example 6 was measured by the refraction angle method, and Fig. 5 was obtained which shows a relationship between a core radial position and a relative refractive index difference. Since a flow rate of silicon tetrachloride as a glass raw material supplied to the core portion deposition burner was decreased compared to the example 1, the core radius r_{0.45} became 10.0 mm, which was somewhat smaller than in the example 1. There is a radial position r_{ΔM} where the relative refractive index difference exhibits a local maximum value ΔM in a range of 5% inside the core radial position r_{0.45} (0.500 mm), where ΔM = 0.320% and r_{ΔM} = 9.724 mm. Also, there is a local minimum value of the relative refractive index difference Δm = 0.308% inside it. The value of ΔM-Δm is 0.012%. Also, since a dehydration temperature was set lower than in the example 1, a ratio between the radial positions r_{0.75} and r_{0.45}, i.e., r_{0.75}/r_{0.45}, became 0.984. In this way, locating the radial position r_{0.75} outside r_{ΔM}, i.e., r_{0.75} < r_{ΔM}, allows to design a zero-dispersion wavelength of the resulting optical fiber to be short. A clad was hypothetically added to the core glass rod with such refractive index distribution and the optical characteristic was estimated and calculated. Also, when a clad was actually added to this core glass rod and the core glass rod was drawn to actually measure the cut-off wavelength of the optical fiber, a discrepancy between a previously obtained estimated value and an actually measured value of the cut-off wavelength was as little as 5 nm.

### Comparative Examples

As a comparative example 1 of the present embodiment, a total of three burners which include a core portion deposition burner 13, a first clad portion deposition burner 14, and a second clad portion deposition burner 15 were used to manufacture a glass fine particle deposit under conditions below. In Fig. 3, the cross-sectional shape of the first clad portion deposition burner 14 and the second clad portion deposition burner 15 is illustrated. A concentric quadruple-tube burner was used as the core portion deposition burner 13, and 0.36 L/min of silicon tetrachloride, 16 mL/min of germanium tetrachloride, and 0.19 L/min of argon as carrier gas were flowed through a central tube. 6.5 L/min of hydrogen was flowed through a second innermost tube, 0.75 L/min of argon as seal gas was flowed through a third innermost tube, and 10.2 L/min of oxygen was flowed through an outermost tube. In the first clad portion deposition burner, 0.80 L/min of silicon tetrachloride and 0.66 L/min of oxygen were flowed through a nozzle 21a, 34 L/min of hydrogen was flowed through a nozzle 21d, 18 L/min of oxygen was flowed through a nozzle 21f, and a total of 1.5 L/min of oxygen was flowed through a group of small-diameter nozzles 21c. On the other hand, in the second clad portion deposition burner, 4.8 L/min of silicon tetrachloride and 3.6 L/min of oxygen were flowed through a nozzle 21a, 65 L/min of hydrogen was flowed through a nozzle 21d, 31 L/min of oxygen was flowed through a nozzle 21f, and a total of 6.2 L/min of oxygen was flowed through a group of small-diameter nozzles 21c.

The manufactured glass fine particle deposit was heated to about 1200°C in a furnace core tube containing chlorine gas and dehydrated, and then heated to about 1550°C in the furnace core tube containing helium gas and vitrified into transparent glass to obtain a core glass rod.

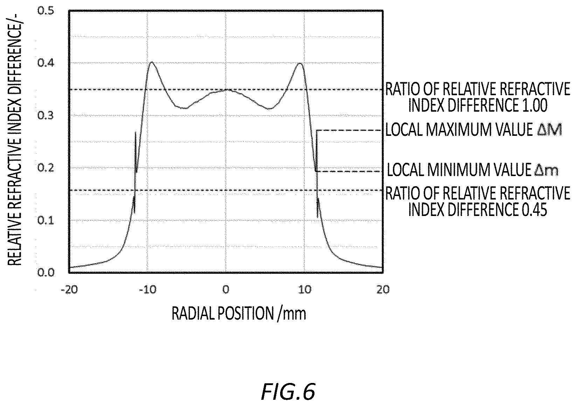

A refractive index distribution of the core glass rod of the comparative example 1 was measured by the refraction angle method, and Fig. 6 was obtained. A clad was hypothetically added to the core glass rod with such refractive index distribution and the optical characteristic was estimated and calculated. Also, when a clad was actually added to this core glass rod and the core glass rod was drawn to actually measure the cut-off wavelength of the optical fiber, the actually measured value of the cut-off wavelength was significantly greater than the estimated value, and the discrepancy was 67 nm.

According to Fig. 6, when a ratio of the relative refractive index difference at the core center is 1.00, a position where the ratio of a relative refractive index difference is 0.45 is defined as a core radial position, then there is a local maximum value of the relative refractive index difference ΔM = 0.272% in a range of 5% inside the core radial position (0.581 mm inside and outside), and there is a local minimum value of the relative refractive index difference Δm = 0.193% on its outside. The value of ΔM-Δm is 0.079%, and there is a wide discrepancy between the estimated cut-off wavelength and the actually measured fiber cut-off wavelength.

In comparative examples 2 to 5, core glass rods were each manufactured similarly to the comparative example 1, and for the core glass rods, the value of ΔM-Δm (%) and a degree of discrepancy between estimated cut-off wavelengths and actually measured fiber cut-off wavelengths were obtained and collectively shown in Table 1.

Turning to Table 1, in the examples 1 to 5, any value of ΔM-Δm (%) is as small as 0.04% or less, and the degree of discrepancy between the estimated cut-off wavelength (nm) and the actually measured fiber cut-off wavelength (nm) is also as small as 10 nm or less, meaning that the cut-off wavelengths are estimated with good accuracy. Conversely, in the comparative examples 1 to 5, the value of ΔM-Δm (%) exceeds 0.04%, and the degree of discrepancy between the estimated cut-off wavelength (nm) and the actually measured fiber cut-off wavelength (nm) also exceeds 10 nm significantly.

**Table 1**

| | **ΔM-Δm (%)** | **DISCREPAN CY OF CUT-OFF WAVELENG THS (nm)** | **CORE RADIUS r0.45 (mm)** | **RATIO BETWEEN CORE RADII r0.75 / r0.45 ( - )** | **RADIAL POSITION OF LOCAL MAXIMUM VALUE rΔM (mm)** |
|---|---|---|---|---|---|
| **EXAMPLE 1** | **0.038** | **+7** | **11.52** | **0.942** | **11.47** |
| **EXAMPLE 2** | **0.025** | **-12** | **10.75** | **0.933** | **10.70** |
| **EXAMPLE 3** | **0.012** | **-8** | **11.23** | **0.928** | **11.18** |
| **EXAMPLE 4** | **0.005** | **-6** | **11.52** | **0.917** | **11.47** |
| **EXAMPLE 5** | **- (WITHOUT LOCAL MAXIMUM VALUE)** | **+4** | **11.52** | **0.912** | **-** |
| **EXAMPLE 6** | **0.012** | **+5** | **10.00** | **0.982** | **9.72** |
| **COMPARATIVE EXAMPLE 1** | **0.079** | **+67** | **11.62** | **0.938** | **11.57** |
| **COMPARATIVE EXAMPLE 2** | **0.059** | **+34** | **11.62** | **0.941** | **11.57** |
| **COMPARATIVE EXAMPLE 3** | **0.046** | **+23** | **11.57** | **0.942** | **11.52** |
| **COMPARATIVE EXAMPLE 4** | **0.070** | **+18** | **11.52** | **0.942** | **11.47** |
| **COMPARATIVE EXAMPLE 5** | **0.081** | **+90** | **11.62** | **0.938** | **11.57** |

### EXPLANATION OF REFERENCES

11: starting material, 12: glass fine particle deposit, 13: core portion deposition burner, 14: first clad portion deposition burner, 15: second clad portion deposition burner, 20: burner, 21a: innermost gas ejection opening, 21b: second gas ejection opening from inside, 21c: a group of small-diameter nozzles in a third gas ejection region from inside, 21d: third gas ejection opening from an innermost part, 21e: fourth gas ejection opening from inside, 21f: fifth gas ejection opening from inside.

## Claims

1. An optical fiber preform, when manufactured by manufacturing a core glass preform composed of a core portion and a part of a clad portion, and then providing a remaining part of the clad portion on outside of the core glass preform, **characterized in that**, in the core glass preform, a radial position where a relative refractive index difference has a value which is 0.45 times the relative refractive index difference at a core center is defined as a core radial position, then there is, in a range of 5% inside the core radial position, a location where the relative refractive index difference exhibits a locally high local maximum value ΔM and a location where the relative refractive index difference exhibits a locally low local minimum value Δm and a value of ΔM-Δm which does not exceed 0.04%.

2. The optical fiber preform according to claim 1, **characterized in that** the value of ΔM-Δm does not exceed 0.03%.

3. The optical fiber preform according to claim 1, **characterized in that** the value of ΔM-Δm does not exceed 0.02%.

4. The optical fiber preform according to claim 1, **characterized in that** the value of ΔM-Δm does not exceed 0.01%.

5. A manufacturing method for an optical fiber preform by manufacturing a core glass preform composed of a core portion and a part of a clad portion, and then providing a remaining part of the clad portion on outside of the core glass preform, **characterized in that**, in the core glass preform, a radial position where a relative refractive index difference has a value which is 0.45 times the relative refractive index difference at a core center is defined as a core radial position, then there is, in a range of 5% inside the core radial position, a location where the relative refractive index difference exhibits a locally high local maximum value ΔM and a location where the relative refractive index difference exhibits a locally low local minimum value Δm, and the remaining part of the clad portion is provided on outside of the core glass preform having a value of ΔM-Δm which does not exceed 0.04%.

6. The manufacturing method for an optical fiber preform according to claim 5, **characterized in that** the value of ΔM-Δm does not exceed 0.03%.

7. The manufacturing method for an optical fiber preform according to claim 5, **characterized in that** the value of ΔM-Δm does not exceed 0.02%.

8. The manufacturing method for an optical fiber preform according to claim 5, **characterized in that** the value of ΔM-Δm does not exceed 0.01%.
